# EUROPEAN PATENT APPLICATION

(11) **EP 4 818 859 A1**
(43) Date of publication of application: **07.10.2026**
(21) Application number: 26166443.7
(22) Date of filing: 20.03.2026
(51) Int. Cl.: G06F 3/048, G06F 3/12, G06F 3/0481, G06F 3/0485, H04N 1/00

(54) **DISPLAY CONTROL METHOD, IMAGE FORMING APPARATUS, AND INFORMATION PROCESSING APPARATUS**

(30) Priority: 31.03.2025 JP 2025058062
(71) Applicant: KYOCERA Document Solutions Inc., Osaka-shi, Osaka 540-8585 (JP)
(72) Inventor: Matsuo, Yumeka, Osaka-shi, 540-8585 (JP)
(74) Representative: Plougmann Vingtoft a/s

(57) **Abstract**

A processor causes a display device to display a graph image in which a plurality of graph elements, each of which is an image representing data relating to operating status of the target device, are arranged. The processor causes a target data image including text relating to the operating status data corresponding to a target graph element to be displayed at a position corresponding to the target graph element in a specific area. The processor, when a drag operation that moves the target data image is detected, changes the display position of the target data image in a direction of the drag operation. The processor changes the target graph element and changes the display of the target data image in response to a change in the display position of the target data image.

## Description

### BACKGROUND

The present disclosure relates to a display control method, an image forming apparatus, and an information processing apparatus.

The display control method is a method for causing a display device to display a graph image. Each of the image forming apparatus and the information processing apparatus implements the display control method.

An image forming apparatus may have a function for deriving data relating to operating status thereof, such as power consumption or developing agent consumption.

For example, it is known that the image forming apparatus derives data relating to the power consumption and developing agent consumption of the apparatus itself, and further derives data relating to greenhouse gas emissions based on results of the derived data.

The data relating to the power consumption, the developing agent consumption amount, and the greenhouse gas emission amount are examples of data relating to the operating status of the image forming apparatus.

### SUMMARY

A display control method according to one aspect of the present disclosure is a method for controlling display of a display device in a target device that includes the display device capable of displaying an image and an operation device that detects an operation of the display device. The display control method includes a processor causing the display device to display a graph image in which a plurality of graph elements, each of which is an image representing data relating to operating status of the target device, are arranged. In addition, the display control method includes the processor, when the graph image is displayed on the display device, causing the display device to display a target data image including text related to the operating status data corresponding to a target graph element selected from the plurality of graph elements at a position corresponding to the target graph element in a specific area of an entire display area of the display device that is different from a graph area in which the plurality of graph elements are displayed. Moreover, the display control method includes the processor, when a swipe operation of sliding and moving the target data image along an arrangement direction of the plurality of graph elements in the graph area is detected by the operation device, changing a display position of the target data image in the specific area in a direction of the swipe operation. Furthermore, the display control method includes the processor changing the target graph element to one of the plurality of graph elements that corresponds to the display position of the target data image in response to a change in the display position of the target data image, and changing the display of the target data image to a display that corresponds to the changed target graph element.

An image forming apparatus according to another aspect of the present disclosure includes a printing device that forms an image on a sheet, the display device, the operation device, and the processor that implements the display control method. The processor causes the display device to display an image representing the operating status of a target device including the printing device.

An information processing apparatus according to another aspect of the present disclosure includes the display device, the operation device, and the processor that implements the display control method.

This Summary is provided to introduce a selection of concepts in a simplified form that are further described below in the Detailed Description with reference where appropriate to the accompanying drawings. This Summary is not intended to identify key features or essential features of the claimed subject matter, nor is it intended to be used to limit the scope of the claimed subject matter. Furthermore, the claimed subject matter is not limited to implementations that solve any or all disadvantages noted in any part of this disclosure.

### BRIEF DESCRIPTION OF THE DRAWINGS

FIG. 1 is a block diagram showing a configuration of an image forming apparatus according to an embodiment.
FIG. 2 is a flowchart showing an example of a procedure for controlling display of operating status on an image forming apparatus according to an embodiment.
FIG. 3 is a diagram showing an example of an operating status presentation screen in an initial state displayed on an image forming apparatus according to an embodiment.
FIG. 4 is a diagram showing an example of an operating status presentation screen on which a tooltip moves in response to a specific drag operation on an image forming apparatus according to an embodiment.
FIG. 5 is a diagram showing an example of an operating status presentation screen on which a tooltip moves in response to a specific swipe operation on an image forming apparatus according to an embodiment.
FIG. 6 is a diagram showing a first modification of an operating status presentation screen.

### DETAILED DESCRIPTION

Hereinafter, an embodiment according to the present disclosure will be described with reference to the drawings. Note that the following embodiments are examples of a specific embodiment according to the present disclosure, and do not limit the technical scope of the present disclosure.

### [Configuration of Image Forming Apparatus 10]

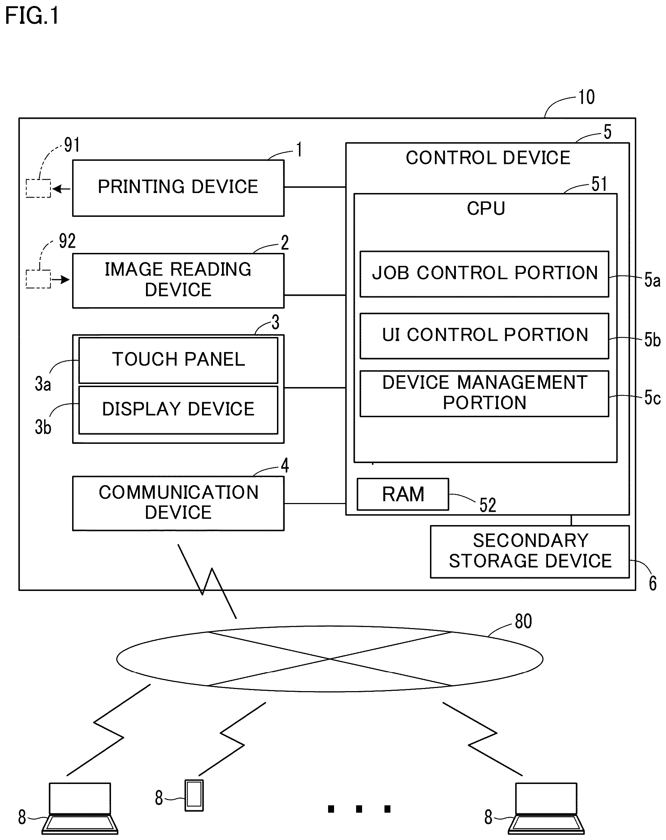

An image forming apparatus 10 according to an embodiment includes a printing device 1 that executes a printing process, and a user interface device 3 (see FIG. 1).

The printing process is a process of forming an image on a sheet 91. For example, the image forming apparatus 10 is a printer, a copier, a facsimile apparatus, a multifunction peripheral, or the like.

The user interface device 3 includes a touch panel 3a that detects touch operations and a display device 3b that can display images. The touch panel 3a is arranged on a screen of the display device 3b.

The touch panel 3a is an example of an operation device that detects an operation. The image forming apparatus 10 is an example of a target apparatus or an information processing apparatus that includes the operation device and the display device 3b.

In the example shown in FIG. 1, the image forming apparatus 10 includes a printing device 1, an image reading device 2, a user interface device 3, a communication device 4, a control device 5, and a secondary storage device 6.

The image forming apparatus 10 is able to communicate with other apparatuses such as a host device 8 via a network 80. The network 80 includes a local area network (LAN), the Internet, and the like. The host device 8 is an information processing apparatus such as a personal computer, a tablet computer, or a smartphone.

The printing device 1 executes the printing process using a predetermined method such as an electrophotographic method or an inkjet method. The printing device 1 includes a sheet conveying mechanism that conveys a sheet 91 and an image forming portion that forms an image on the conveyed sheet 91.

The image reading device 2 executes an image reading process. The image reading process is a process of reading an image from a document 92. The image reading device 2 includes an optical scanning mechanism that scans the document 92 with light, and an image sensor that receives reflected light that is reflected from the document 92.

The image sensor outputs data of a read image. The read image is an image read from the document 92.

The communication device 4 is a communication interface device that performs communication with other devices such as the host device 8 via the network 80. The control device 5 performs all data transmission and reception between the control device 5 and the other devices via the communication device 4.

The printing device 1 executes the printing process based on data of the read image or received print data. The received print data is data included in a print request received from the host device 8 via the communication device 4.

In addition, the communication device 4 is also capable of executing an image transmission process. The image transmission process is a process of transmitting the read image data to a specified destination via the network 80. In the present embodiment, the image transmission process includes a network facsimile transmission process for transmitting the read image data via the network 80.

The control device 5 executes various types of calculations, data processing, and control of various types of electrical devices included in the image forming apparatus 10. Furthermore, the control device 5, by controlling the display device 3b, controls the display on the display device 3b.

The control device 5 includes a CPU 51 and a random access memory (RAM) 52. The CPU 51 is a processor that, by executing computer programs, executes various types of data processing and control.

Note that it is also possible that another processor such as a DSP may execute the data processing and control instead of the CPU 51.

The RAM 52 is a computer-readable volatile storage device. The RAM 52 temporarily stores the computer program executed by the CPU 51 and data output and referenced in a process of the CPU 51 executing the computer program.

The secondary storage device 6 is a computer-readable non-volatile storage device. The secondary storage device 6 is capable of storing computer programs and various types of data. For example, one or both of a solid state drive (SSD) and a hard disk drive are employed as the secondary storage device 6.

The secondary storage device 6 stores the computer programs executed by the CPU 51 and data referenced by the CPU 51. The CPU 51 is an example of a processor.

The image forming apparatus 10 is capable of executing a data recording process for recording the read image data obtained by the image reading device 2 or the received print data obtained via the communication device 4 in the secondary storage device 6.

The CPU 51 includes a plurality of processing modules that are implemented by executing the computer programs. The plurality of processing modules include a job control portion 5a, a UI control portion 5b, and a device management portion 5c.

The job control portion 5a executes job control. The job control is a process of causing each device of the image forming apparatus 10 to execute image processing corresponding to a request input via the touch panel 3a or the communication device 4.

The job control portion 5a controls the printing device 1, the image reading device 2, the communication device 4, and the like. The job control portion 5a causes part or all of the printing device 1, the image reading device 2, and the communication device 4 to execute the requested image processing.

The image processing includes the printing process, the image reading process, the image transmission process, and the data recording process.

The device management portion 5c determines various types of states of the image forming apparatus 10 and controls an operation state of the image forming apparatus 10 according to the determination results. Furthermore, the device management portion 5c derives and records data relating to the operating status of the image forming apparatus 10 including the printing device 1.

For example, the device management portion 5c determines whether or not a sleep condition is met, and when the sleep condition is met, changes the image forming apparatus 10 from a normal mode to a power saving mode that consumes less power than the normal mode.

In addition, the device management portion 5c derives hourly, daily, and monthly power consumption of the image forming apparatus 10 based on detection results of a power detection circuit (not shown), and records power consumption data representing the derived power consumption in the secondary storage device 6.

Furthermore, the device management portion 5c derives hourly, daily, and monthly consumption amounts of consumables, and records consumables consumption data representing the derived results of the consumables consumption amounts in the secondary storage device 6. For example, the consumables consumption amounts include a consumption amount of developing agent consumed in the printing process and a number of sheets 91 used.

Furthermore, the device management portion 5c converts the power consumption and the consumables consumption amounts into greenhouse gas emissions, and records greenhouse gas conversion data for each hour, day, and month in the secondary storage device 6. For example, the greenhouse gas is carbon dioxide.

The power consumption data, the consumables consumption data, and the greenhouse gas conversion data are each an example of data relating to the operating status of the image forming apparatus 10.

The UI control portion 5b causes the display device 3b to display various types of information relating to the image forming apparatus 10. In the image forming apparatus 10, it is desirable that the operating status data that includes a large amount of information can be displayed in an easy-to-understand manner in the limited display area of the display device 3b.

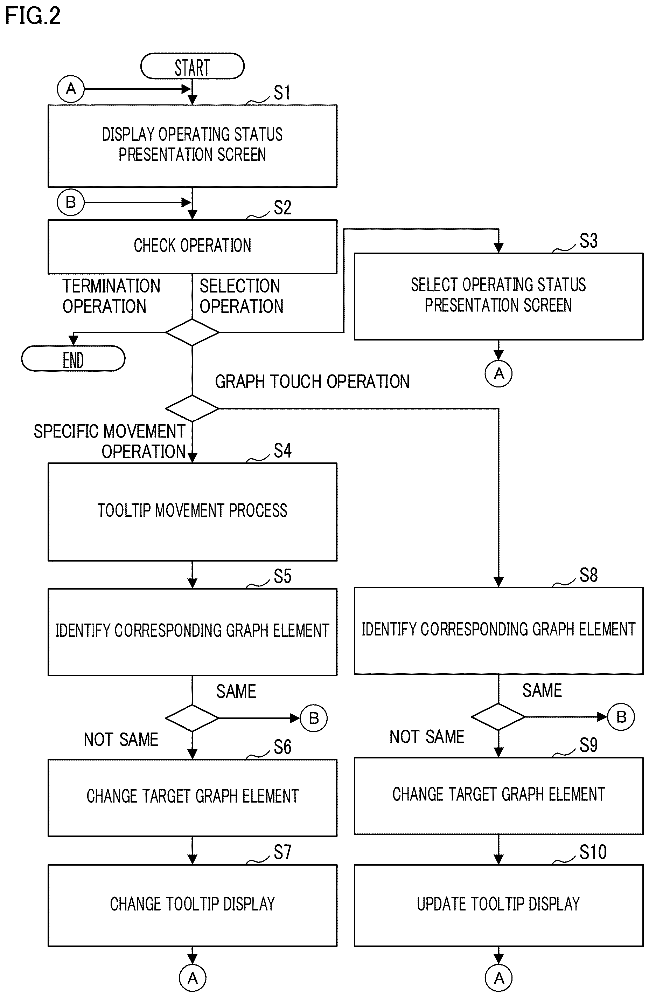

The UI control portion 5b executes operating status display control described later (see FIG. 2). The operating status display control is control for causing the display device 3b to display the operating status data. The operating status display control includes a process for displaying the operating status data in an easy-to-understand manner in the limited display area of the display device 3b.

The UI control portion 5b causes the display device 3b to display a menu screen including a plurality of operation icons, and causes the display device 3b to display a screen corresponding to an operation of selecting one of the plurality of operation icons. The operation of selecting one of the plurality of operation icons is detected by the touch panel 3a.

The UI control portion 5b executes the operating status display control when an operation of selecting a specific icon from among the plurality of operation icons is detected. The specific icon is an icon that receives an operation to instruct that the operating status data of the image forming apparatus 10 be displayed in a graph form.

### [Operating status Display Control]

An example of a procedure for the operating status display control will be described below with reference to the flowchart shown in FIG. 2.

The operating status display control is an example of a process that implements a display control method for controlling the display of the display device 3b. The CPU 51 including the UI control portion 5b is an example of a processor that implements the display control method.

In the following description, S1, S2, and so on represent identification codes of a plurality of processes in the operating status display control. In the operating status display control, first, the process of step S1 is executed.

### <Step S1>

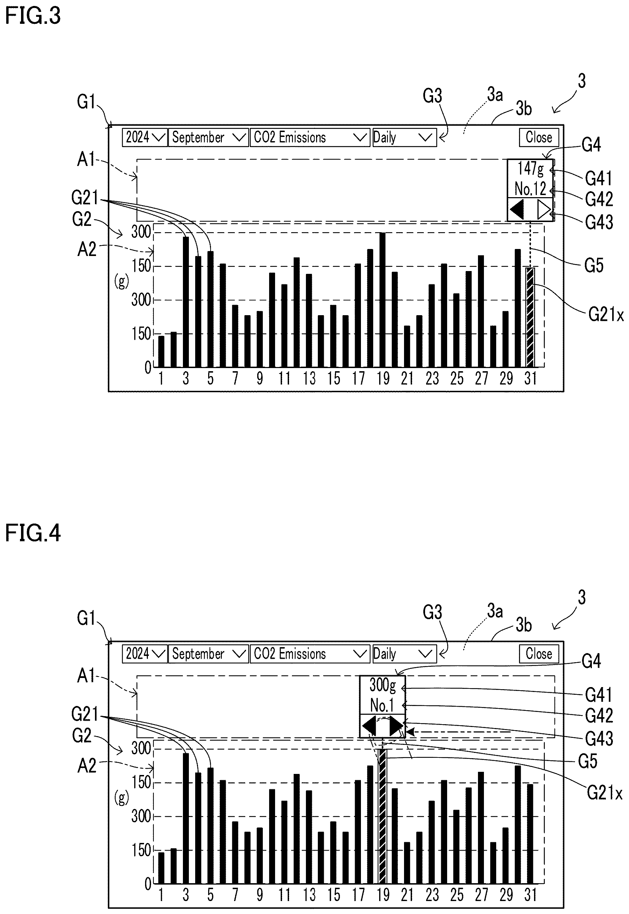

In step S1, the UI control portion 5b causes the display device 3b to display an operating status presentation screen G (see FIG. 3).

The operating status presentation screen G1 includes a graph image G2 in which a plurality of graph elements G21 are arranged (see FIG. 3). The plurality of graph elements G21 are images that represent the operating status data of the image forming apparatus 10. In the example shown in FIG. 3, the graph image G2 is an image of a bar graph.

In the example shown in FIG. 3, the operating status presentation screen G1 further includes a selection menu G3 that receives an operation to select the type of operating status data to be displayed as the graph image G2.

In the present embodiment, the operating status presentation screen G1 includes a graph image G2 and a tooltip G4 including text relating to the operating status data (see FIG. 3). The tooltip G4 includes text corresponding to a target graph element G21x selected from the plurality of graph elements G21.

In the example shown in FIG. 3, the tooltip G4 includes value text G41 and ranking text G42 corresponding to the target graph element G21x.

The value text G41 is text that represents a value of the operating status data corresponding to the target graph element G21x. The ranking text G42 is text that indicates ranking of the values of the data corresponding to the target graph element G21x among the plurality of values of the operating status data corresponding to the plurality of graph elements G21.

Note that the UI control portion 5b may also cause the display device 3b to display a tooltip G4 including target attribute text. The target attribute text is text that represents data among a plurality of attribute data corresponding to a plurality of graph elements G21 that correspond to the target graph element G21x.

In the example shown in FIG. 3, the plurality of attribute data corresponding to the plurality of graph elements G21 are data for a plurality of days in a predetermined year and month.

The UI control portion 5b causes the display device 3b to display a tooltip G4 including part or all of the value text G41, the ranking text G42, and the target attribute text corresponding to the target graph element G21x.

When initial operating status presentation screen G1 is displayed on the display device 3b, the UI control portion 5b selects a predetermined one of the plurality of graph elements G21 as the target graph element G21x.

In addition, the UI control portion 5b may select the target graph element G21x that was selected when the display of the operating status presentation screen G1 was last ended when the operating status presentation screen G1 is newly displayed on the display device 3b.

As will be described later, there may be cases where a new target graph element G21x is selected while the operating status presentation screen G1 is displayed on the display device 3b.

The text included in the tooltip G4 includes some or all of letters, numbers, and symbols. The tooltip G4 is an example of a target data image that includes text corresponding to the target graph element G21x.

When the UI control portion 5b causes the display device 3b to display the operating status presentation screen G1, the UI control portion 5b causes the display device 3b to highlight and display the target graph element G21x from among the plurality of graph elements G21 (see FIG. 3).

For example, the highlighted display of the target graph element G21x may be in a different color, may blink, or may have a specific pattern.

The UI control portion 5b causes the tooltip G4 to be displayed at a position corresponding to the target graph element G21x in a specific area A1 that is a part of the entire display area of the display device 3b (see FIGS. 3 to 5). In the present embodiment, the specific area A1 is an area outside the display area of the graph image G2. In addition, the tooltip G4 is displayed at a position overlapping the target graph element G21x in the arrangement direction of the plurality of graph elements G21.

In FIGS. 3 to 5, a graph area A2 that is a part of the entire display area of the display device 3b is an area in which the plurality of graph elements G21 are displayed. The graph area A2 is a part of or the entire area of the display area of the graph image G2. In the present embodiment, the specific area A1 is an area different from the graph area A2.

In the examples shown in FIGS. 3 to 5, the graph image G2 is a graph in which attributes of data corresponding to the plurality of graph elements G21 are on an X axis and values of data corresponding to the plurality of graph elements G21 are on a Y axis. The specific area A1 is an area along the X-axis direction outside the Y-axis direction of the graph image G2.

The X-axis direction of the graph image G2 is the arrangement direction of the plurality of graph elements G21. In the example shown in FIG. 3, the X-axis direction of the graph image G2 is the horizontal direction of the screen of the display device 3b. Note that the X-axis direction of the graph image G2 may be the vertical direction of the screen of the display device 3b.

When the UI control portion 5b causes the display device 3b to display the operating status presentation screen G1, the UI control portion 5b causes the display device 3b to display a line image G5 that associates the tooltip G4 with the target graph element G21x (see FIG. 3).

The UI control portion 5b causes the display device 3b to display the tooltip G4 including a direction display mark G43 indicating that the tooltip G4 can be moved along the arrangement direction (see FIG. 3).

The UI control portion 5b executes the process of step S2 following the process of step S1.

### <Step S2>

In step S2, the UI control portion 5b checks the operation detected by the touch panel 3a and selects the next process in accordance with the detected operation.

The UI control portion 5b executes the process of step S3 when a selection operation on the selection menu G3 is detected. In addition, the UI control portion 5b terminates the operating status display control when a predetermined termination operation is detected.

On the other hand, when a specific movement operation is detected, the UI control portion 5b executes the process of step S4. In the present embodiment, the specific movement operation is a specific drag operation or a specific swipe operation.

The specific drag operation is a drag operation that moves the tooltip G4 in the specific area A1 along the arrangement direction. The specific swipe operation is a swipe operation of sliding movement along the arrangement direction in the graph area A2.

The UI control portion 5b executes the process of step S4 when the specific movement operation is detected.

In addition, when a graph touch operation is detected, the UI control portion 5b executes the process of step S8. The graph touch operation is a touch operation in the graph area A2. The touch operation is an operation that does not involve a sliding movement. For example, the graph touch operation is a single touch operation, a double touch operation, or a long press operation in the graph area A2.

The UI control portion 5b executes the process of step S8 when the graph touch operation is detected.

### <Step S3>

In step S3, the UI control portion 5b selects the operating status presentation screen G1 corresponding to the selection operation on the selection menu G3 from among a plurality of candidate screens.

After executing the process of step S3, the UI control portion 5b executes the processes from step S1 onwards. In step S1, the UI control portion 5b causes the display device 3b to display the operating status presentation screen G1 selected in step S3.

### <Step S4>

In step S4, the UI control portion 5b executes a tooltip movement process. The tooltip movement process includes a process of changing the display position of the tooltip G4 in the specific area A1 in a direction of the specific movement operation.

In a case in which the specific movement operation is the specific drag operation, the direction of the specific movement operation is the direction of the specific drag operation. In a case in which the specific movement operation is the specific swipe operation, the direction of the specific movement operation is the direction of the specific swipe operation.

Furthermore, the tooltip movement process also includes a process of changing the display position of the line image G5 in the direction of the specific movement operation.

The UI control portion 5b executes the process of step S5 following the process of step S4.

### <Step S5>

In step S5, the UI control portion 5b identifies a corresponding graph element, which is one of the plurality of graph elements G21 that corresponds to the display position of the tooltip G4.

Note that one of the plurality of graph elements G21 corresponding to the display position of the tooltip G4 is also one of the plurality of graph elements G21 corresponding to the most recent operation position in the specific movement operation.

In a case in which the identified corresponding graph element is the same as the current target graph element G21x, the UI control portion 5b executes the processes from step S2 onwards.

On the other hand, in a case in which the identified corresponding graph element is not the same as the current target graph element G21x, the UI control portion 5b executes the process of step S6.

### <Step S6>

In step S6, the UI control portion 5b changes the target graph element G21x to the corresponding graph element.

The UI control portion 5b executes the process of step S7 in conjunction with the process of step S6.

### <Step S7>

In step S7, the UI control portion 5b changes the display of the tooltip G4 to a display corresponding to the changed target graph element G21x.

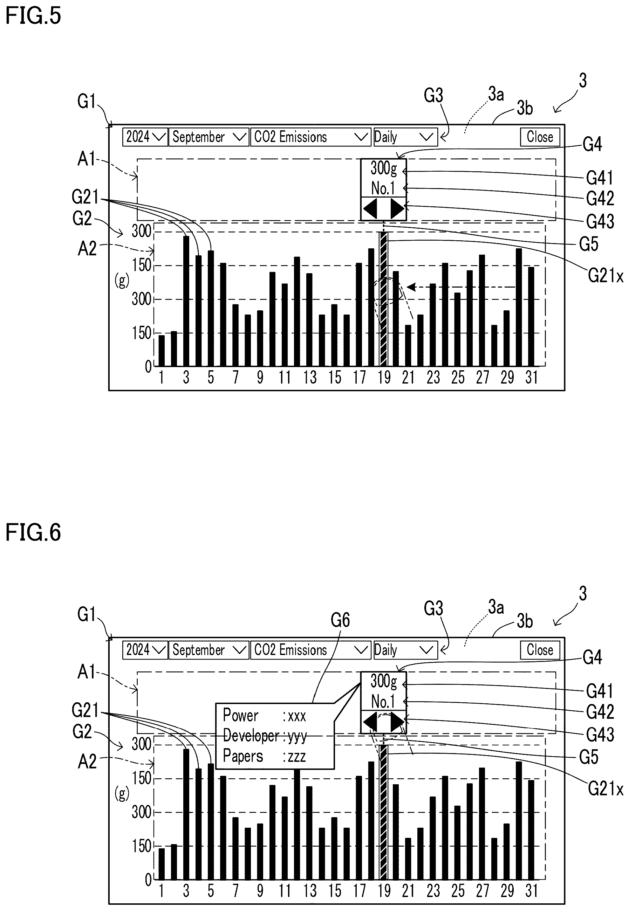

The operating status presentation screen G1 shown in FIGS. 4 and 5 shows an example of a state in which the display position and display content of the tooltip G4 on the operating status presentation screen G1 shown in FIG. 3 have been changed by the process of step S7.

FIG. 4 shows an example of a state in which the display position and display content of the tooltip G4 are changed in response to detection of the specific drag operation. FIG. 5 shows an example of a state in which the display position and display content of the tooltip G4 are changed in response to the detection of the specific swipe operation.

In step S7, the UI control portion 5b highlights the changed target graph element G21x of the plurality of graph elements G21 and displays the highlighted target graph element G21x on the display device 3b (see FIGS. 4 and 5).

After executing the process of step S7, the UI control portion 5b executes the processes from step S1 onwards.

### <Step S8>

On the other hand, in step S8, the UI control portion 5b identifies one of the plurality of graph elements G21 that corresponds to the detected position of the graph touch operation as the corresponding graph element.

In a case in which the identified corresponding graph element is the same as the current target graph element G21x, the UI control portion 5b executes the processes from step S2 onwards.

On the other hand, in a case in which the identified corresponding graph element is not the same as the current target graph element G21x, the UI control portion 5b executes the process of step S9.

### <Step S9>

In step S9, the UI control portion 5b changes the target graph element G21x to the corresponding graph element.

The UI control portion 5b executes the process of step S10 in conjunction with the process of step S9.

### <Step S10>

In step S10, the UI control portion 5b executes a display update process for the tooltip G4. The display update process includes a display position change process and a display content change process.

The display position change process is a process of changing the display position of the tooltip G4 in the specific area A1 to a position corresponding to the detected position of the specific touch operation. The display content change process is a process of changing the display content of the tooltip G4 to content corresponding to the changed target graph element G21x.

In step S10, the UI control portion 5b highlights the changed target graph element G21x of the plurality of graph elements G21 and displays the highlighted target graph element G21x on the display device 3b (see FIGS. 4 and 5).

After executing the process of step S10, the UI control portion 5b executes the processes from step S1 onwards.

As described above, when the specific swipe operation is detected by the touch panel 3a, the UI control portion 5b changes the display position of the tooltip G4 in the specific area A1 in the direction of the specific swipe operation (see step S4, and FIG. 5).

Similarly, when the specific drag operation is detected by the touch panel 3a, the UI control portion 5b changes the display position of the tooltip G4 in the specific area A1 in the direction of the specific drag operation (see step S4, and FIG. 4).

In addition, when the graph touch operation is detected by the touch panel 3a, the UI control portion 5b changes the display position of the tooltip G4 in the specific area A1 to a position corresponding to the position of the graph touch operation (see step S10).

Furthermore, in response to the change in the display position of the tooltip G4, the UI control portion 5b changes the target graph element G21x to one of the plurality of graph elements G21 that corresponds to the display position of the target graph element G21x (see steps S5, S6, and S9).

Furthermore, the UI control portion 5b changes the target graph element G21x and changes the display of the tooltip G4 to a display corresponding to the changed target graph element G21x (see steps S7 and S10).

By executing the operating status display control, an outline of the operating status data of the image forming apparatus 10 is displayed on the display device 3b as a graph image G2 (see FIGS. 3 and 4).

Furthermore, detailed data corresponding to the target graph element G21x of the operating status data is displayed on the display device 3b as the tooltip G4.

Furthermore, simply by performing the specific movement operation, a new target graph element G21x corresponding to the position of the specific movement operation is automatically selected, and the display content of the tooltip G4 is updated to content corresponding to the new target graph element G21x.

By executing the operating status display control, the operating status data of the image forming apparatus 10 is displayed in an easy-to-understand manner in the limited display area of the display device 3b.

### [First Modification of Operating status Presentation Screen G1]

Next, a first modification of the operating status presentation screen G1 will be described with reference to FIG. 6.

The UI control portion 5b may cause the display device 3b to display a related data image G6 when a related display operation is detected by the touch panel 3a in step S2 of the operating status display control (see FIG. 6). The related data image G6 includes text representing related data related to data corresponding to the target graph element G21x in the operating status data.

More specifically, the related data is other data that has attributes in common with the data corresponding to the target graph element G21x in the operating status data.

For example, the related display operation is a long press operation on the tooltip G4 or the target graph element G21x, or a double touch operation on the tooltip G4 or the target graph element G21x. In addition, an operation icon for receiving the related display operation may be included in advance in the operating status presentation screen G1.

In the example shown in FIG. 6, the UI control portion 5b displays the related data image G6 superimposed on a part of the graph image G2.

When the related data display operation is detected while the related data image G6 is being displayed, the UI control portion 5b clears the display of the related data image G6.

By adopting the present modification, the related data is displayed in the limited display area of the display device 3b only when necessary.

### [Second Modification of Operating status Presentation Screen G1]

Next, a second modification of the operating status presentation screen G1 will be described.

In the present modification, the graph image G2 is an image of a line graph. Similar to the bar graphs shown in FIGS. 3 to 5, the line graph is a graph in which attributes of data corresponding to the plurality of graph elements G21 are plotted on the X axis, and the values of data corresponding to the plurality of graph elements G21 are plotted on the Y axis.

### [Third Modification of Operating status Presentation Screen G1]

Next, a third modification of the operating status presentation screen G1 will be described.

In the present modification, the graph image G2 is an image of a pie chart. In the pie chart, a plurality of graph elements G21 are arranged along a circle centered on predetermined reference coordinates, and a width of each of the plurality of graph elements G21 in a direction along the circle represents the data value corresponding to each of the plurality of graph elements G21.

For example, in a case in which the graph image G2 is an image of a pie chart, the specific area A1 is a ring-shaped area that follows along the outer edge of the pie chart.

### [Other]

In the user interface device 3, a mouse, a trackball, or the like may be employed as the operation device that detects an operation.

In addition, the UI control portion 5b may also execute the operating status display control by controlling a host display device, which is a display device provided in the host device 8, as a control target. In this case, the UI control portion 5b controls the display of the host display device via the communication device 4.

Furthermore, the UI control portion 5b acquires, via the communication device 4, operation details detected by a host operation device, which is an operation device provided in the host device 8, and controls the display of the host display device according to the acquired operation details.

Note that the host operation device is a touch panel, a mouse, a trackball, or the like.

In addition, the image forming apparatus 10 may transmit the data relating to the operating status to the host device 8, and a microprocessor included in the host device 8 may execute the operating status display control. In this case, the microprocessor of the host device 8 implements the operating status display control by executing a pre-installed application program.

It is to be understood that the embodiments herein are illustrative and not restrictive, since the scope of the disclosure is defined by the appended claims.

## Claims

1. A display control method for controlling a display of a display device (3b) that is capable of displaying an image in a target device (10) that includes the display device (3b) and an operation device (3a) that detects an operation,
the display control method comprising:
a processor (51) causing the display device (3b) to display a graph image in which a plurality of graph elements (G21), each of which is an image representing data relating to operating status of the target device (10), are arranged;
the processor (51), when the graph image is displayed on the display device (3b), causing the display device (3b) to display a target data image (G4) including text related to the operating status data corresponding to a target graph element (G21x) selected from the plurality of graph elements (G21) at a position corresponding to the target graph element (G21x) in a specific area of an entire display area of the display device (3b) that is different from a graph area in which the plurality of graph elements (G2) are displayed;
the processor (51), when a swipe operation of performing a sliding movement along an arrangement direction of the plurality of graph elements (G21) in the graph area is detected by the operation device (3a), changing a display position of the target data image (G4) in the specific area in a direction of the swipe operation; and
the processor (51) changing the target graph element (G21x) to one of the plurality of graph elements (G21) that corresponds to the display position of the target data image (G4) in response to a change in the display position of the target data image (G4), and changing the display of the target data image (G4) to a display that corresponds to the changed target graph element (G21x).

2. The display control method according to claim 1, comprising
the processor (51), when a touch operation in the graph area is detected by the operation device (3a), changing the display position of the target data image (G4) in the specific area to a position corresponding to the detected position of the touch operation.

3. The display control method according to claim 1 or claim 2, comprising
the processor (51), when the operation device detects a drag operation that moves the target data image (G4) in the specific area along the arrangement direction, changing the display position of the target data image (G4) in the specific area in a direction of the drag operation.

4. The display control method according to any one of claims 1 to 3, comprising
the processor (51) highlighting the target graph element (G21x) among the plurality of graph elements (G21) and causing the display device (3b) to display the target graph element (G21x).

5. The display control method according to any one of claims 1 to 4, wherein
the target data image (G4) includes a direction display mark (G43) indicating that the target data image (G4) can be moved along the arrangement direction.

6. The display control method according to any one of claims 1 to 5, wherein
the graph image (G2) is an image of a bar graph, an image of a line graph, or an image of a pie chart.

7. The display control method according to any one of claims 1 to 6, comprising
the processor (51) causing the display device (3b) to display a line image (G5) that associates the target data image (G4) with the target graph element (G21x), and changing the display position of the line image (G5) in accordance with changes in the display position of the target data image (G4).

8. The display control method according to any one of claims 1 to 7, wherein
the target data image (G4) includes text representing part or all of ranking of a value of the operating status data corresponding to the target graph element (G21x), and values of data corresponding to the target graph element (G21x)among the plurality of attribute data corresponding to the plurality of graph elements (G21) and the data corresponding to the target graph element (G21x) among the plurality of values of the operating status data corresponding to the plurality of graph elements (G21).

9. An image forming apparatus, comprising:
a printing device configured to form an image on a sheet;
a display device (3b) configured to be capable of displaying images;
an operation device (3a) configured to detect an operation; and
a processor (51) configured to cause the display device (3b) to display an image representing operating status of a target device (10) including the printing device, and implement a display control method according to any one of claims 1 to 8.

10. An information processing apparatus (10) comprising
a display device (3b) configured to be capable of displaying images;
an operation device (3a) configured to detect an operation; and
a processor (51) configured to implement the display control method according to any one of claims 1 to 9.
